# EUROPÄISCHE PATENTSCHRIFT

(11) **EP 2 180 956 B1**
(45) Veröffentlichungstag und Bekanntmachung des Hinweises auf die Patenterteilung: **22.12.2010**
(21) Anmeldenummer: 08784927.9
(22) Anmeldetag: 21.07.2008
(51) Int. Cl.: B05B 15/12, C09D 7/00

(54) **VERFAHREN ZUR VERSORGUNG EINER BESCHICHTUNGSANLAGE MIT EINEM PARTIKELFÖRMIGEN HILFSMATERIAL**
METHOD FOR SUPPLYING A COATING SYSTEM WITH A PARTICULATE AUXILIARY MATERIAL
PROCÉDÉ POUR ALIMENTER UNE INSTALLATION DE REVÊTEMENT EN AGENT AUXILIAIRE SOUS FORME DE PARTICULES

(30) Priorität: 24.08.2007 DE 102007040154
(43) Veröffentlichungstag der Anmeldung: 05.05.2010
(73) Patentinhaber: Dürr Systems GmbH, 74321 Bietigheim-Bissingen (DE)
(72) Erfinder: FRITZ, Hans-Georg, 73760 Ostfildern (DE); HOLZHEIMER, Jens, 71732 Tamm (DE); WIELAND, Dietmar, 71336 Waiblingen (DE)
(74) Vertreter: Heusler, Wolfgang
(86) Internationale Anmeldenummer: PCT/EP2008/005961
(87) Internationale Veröffentlichungsnummer: WO 2009/026996

(56) Entgegenhaltungen:
- EP-A- 1 704 925
- WO-A-91/18679

## Beschreibung

Die Erfindung betrifft ein Verfahren und eine Einrichtung zur Versorgung einer Beschichtungsanlage mit einem partikelförmigen Hilfsmaterial gemäß dem Oberbegriff der unabhängigen Patentansprüche. Hierbei handelt es sich insbesondere um eine Anlage zum automatischen Lackieren von Fahrzeugkarossen oder deren Teilen vorzugsweise mit Lackierrobotern.

Verfahren und Vorrichtungen dieser Gattung sind insbesondere aus WO 91/18679, WO 2007/039276 A1 und WO 2007/039275 A1 sowie aus DE 10 2005 013 708 A1, DE 10 2005 013 709 A1, DE 10 2005 013 710 A1 und DE 10 2005 013 711 A1 bekannt. Nach diesen Systemen erfolgt die trockene Abtrennung des Nasslack-Oversprays aus dem Abluftstrom der Sprühkabine in einer Filtervorrichtung, nachdem mit einer Düsenanordnung zuvor ein fließfähiges, partikelförmiges, sogenanntes Precoatmaterial in den Abluftstrom abgegeben wurde. Der Zweck des Precoatmaterials besteht im bekannten Fall darin, sich als Sperrschicht an den Filteroberflächen abzusetzen, um zu verhindern, dass diese Flächen durch anhaftende Overspraypartikel verkleben. Als Precoatmaterial, das mit dem Overspray in der Filtervorrichtung abgeschieden wird, soll insbesondere Kalk, Steinmehl, Aluminiumsilikate, Aluminiumoxide, Siliziumoxide, Pulverlack oder Ähnliches verwendet werden. Durch periodisches Reinigen der Filtervorrichtung gelangt das Gemisch aus Precoatmaterial und Nasslack-Overspray in Aufnahmebehälter, aus denen es teilweise einer erneuten Verwendung als Precoatmaterial zugeführt werden kann. Die Aufnahmebehälter sind unter dem Applikationsbereich über die gesamte horizontale Kabinenquerschnittsfläche verteilt. Die das Precoatmaterial in den Abluftstrom abgebende Düsenanordnung wird von einem das Precoatmaterial in fließfähigem Zustand enthaltenden Vorlagebehälter mit einem Injektor versorgt.

Aus DE 4211465 C2 ist ein anderes Verfahren der eingangs genannten Gattung bekannt, das zum trockenen Abscheiden, Wiedergewinnen und Aufarbeiten eines beim Spritzlackieren anfallenden Nebels aus klebrigen Lackteilchen aus dem Absaugeluftstrom dient. Bei diesem Verfahren erfolgt die Zugabe eines lackverträglichen, auf die Verwertung des abgeschiedenen Nebels abgestellten Hilfsstaubs. Als lackverträgliche Hilfsstäube sollen Farbpigmente oder anorganische Füllstoffe verwendet werden. Zur Verwertung wird ein Teil des rückgewonnen Hilfsstaubs wieder in den Kreislauf durch die Kabine eingeführt, während der andere Teil zur Aufarbeitung dieses Anteils zu neuem Lack unter Zusatz von frischen Lackrohstoffen und/oder Lösemitteln ausgeschleust und durch frischen Hilfsstaub ergänzt wird. Der Hilfsstaub wird durch Düsen in eine unter dem Applikationsbereich angeordnete Mischkammer eingeblasen, so sich die Staubpartikel an die Overspraypartikel in der durch die Mischkammer hindurchfließenden Kabinenluft anlagern. Der so vorbehandelte Abluftnebel aus der Mischkammer wird über eine Absaugleitung einem filternden Abscheider zugeführt, aus dem der wieder in den Kabinenkreislauf eingeführte Teil des Hilfsstaubs in einen Hilfsstaub-Vorratsbunker gelangt, wo er mit dosiert zugeführtem frischem Hilfsstaub vermischt wird. Dieses Gemisch aus frischem und wiedergewonnenem Hilfsstaub wird von einem pneumatischen Sender in eine zu den Düsen der Mischkammer unter dem Applikationsbereich führenden Förderleitung gedrückt.

Ausgehend von diesem Stand der Technik liegt der Erfindung die Aufgabe zugrunde, ein Verfahren und eine Einrichtung zur Versorgung der Beschichtungsanlage mit dem partikelförmigen Hilfsmaterial anzugeben, die eine bessere Beaufschlagung der Overspraypartikel mit dem Hilfsmaterial und zugleich eine besonders zweckmäßige Förderung des Hilfsmaterials ermöglichen.

Die Lösung dieser Aufgabe sowie Ausgestaltungen und Weiterbildungen der Erfindung sind in den Patentansprüchen angegeben.

Die Erfindung beruht auf der Erkenntnis, dass die Beaufschlagung und trockene Abscheidung des Nasslack-Oversprays verbessert werden kann, wenn das Hilfsmaterial nicht wie das Precoatmaterial der bekannten Systeme aus dem Vorlagebehälter in eine Precoatierlanze gefördert und von dieser in die Kabinenabluft gesprüht, sondern stattdessen zunächst in unter dem Kabinenboden verteilte Aufnahmebehälter gefördert wird, wo das frische Hilfsmaterial dann in die die Lackpartikel enthaltende Luftströmung eingeführt werden kann.

Vorzugsweise wird hierbei das Hilfsmaterial (Precoat) nicht wie bei den bekannten Systemen von einem Injektor aus dem Vorlagebehälter durch starre Rohrleitungen, sondern insbesondere von einem Blowpot oder einer DDF-Pumpe od. dgl. durch eine flexible Schlauchleitung gefördert. Schläuche sind hinsichtlich Anschaffung und Montage weniger aufwendig als Rohrleitungen und können bei Bedarf zudem einfacher ausgetauscht werden. Ferner haben Schläuche den Vorteil, dass sie mit einfachen mechanischen Quetschventilen eine besonders einfache Steuerung des Materialflusses an den zu den einzelnen Aufnahmebehältern führenden Abzweigstellen der Leitungsanordnung ermöglichen.

Wenn der Vorlagebehälter als Blowpot ausgebildet ist, hat dies den Vorteil einer genauer dosierten Befüllung der Aufnahmebehälter bei relativ großer Förderleistung und auch mit relativ geringen Mengen.

Blowpots sind an sich bekannt (z. B. aus JP 02123025 A oder JP 06278868 A) und wurden in Beschichtungsanlagen in der Praxis bisher dazu verwendet, Pulverlack zu den in der Nähe der Zerstäuber befindlichen Applikationsbehälter zu fördern. Es handelt sich um relativ kleine verschließbare Behälter mit einem luftdurchlässigen Boden, durch den Luft zum Fluidisieren des Pulvers und zu dessen Förderung in den Behälter geleitet wird. Diese Behälter wurden in bekannten Systemen ggf. unter Kontrolle der Füllmenge mit unerwünscht aufwendigen Wiegeeinrichtungen portionsweise gefüllt und dann in der Regel vollständig (bis auf eine kleine Restmenge) entleert.

Ähnliche Vorteile hinsichtlich einer genau dosierten Befüllung wie durch einen Blowpot ergeben sich, wenn stattdessen einem nur zur Fluidisierung ausgebildeten Vorlagebehälter eine Pulverdosierpumpe nachgeschaltet wird, wofür sich vorzugsweise sogenannte DDF-Pumpen oder andere nach dem Dichtstromprinzip mit Saug/Druckwechsel fördernde Dosierpumpen eignen, wie sie beispielsweise aus EP 1 427 536 B1, WO 2004/087331 A1 oder Fig. 3 der DE 101 30 173 A1 bekannt sind. Derartige Pumpen und insbesondere DDF-Pumpen haben den Vorteil eines besonders pulverschonenden und genau dosierbaren Pulvertransports über relativ große Entfernungen, typisch als zentrale Versorgungseinheit für eine bis 24 m lange Lackierkabine.

Wenn der Vorlagebehälter unterhalb eines Vorratsbehälters für das Hilfsmaterial angeordnet ist und sich zwischen diesen Behältern eine abdichtende mechanische Fördereinrichtung wie beispielsweise eine Zellenradschleuse oder ein Schneckenförderer befindet, ergibt sich die vorteilhafte Möglichkeit einer kontinuierlichen Nachfüllung und gleichzeitigen Förderung des Hilfsmaterials zu den Aufnahmebehältern.

An dem in der Zeichnung dargestellten Ausführungsbeispiel wird die Erfindung näher erläutert. Es zeigen
- Fig. 1: eine schematische Darstellung einer erfindungsgemäßen Behälter- und Leitungsanordnung;
- Fig. 2: eine Abwandlung des Ausführungsbeispiels nach Fig. 1; und
- Fig. 3: einen für die Anordnungen nach Fig. 1 und Fig. 2 ge- eigneten Vorlagebehälter.

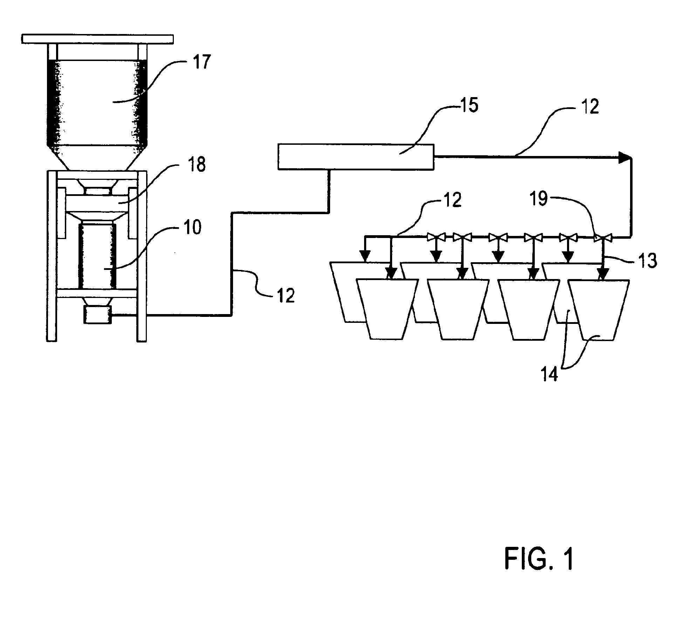

Die in Fig. 1 dargestellte Anordnung dient zur Förderung eines Hilfsmaterials, das zur Aufnahme und/oder Bindung des in der Sprühkabine einer Beschichtungsanlage in die Abluftströmung gelangten Nasslack-Oversprays und bei dessen trockener Abscheidung in einer Filtervorrichtung verwendet wird. Vorzugsweise werden die in der Patentanmeldung DE 10 2007 040 153.3 beschriebenen Hilfspartikel verwendet, die durch eine Hohlraumstruktur und relativ zu ihren Außenabmessungen große innere Oberfläche gekennzeichnet sind und/oder chemisch mit dem Overspray reagieren. Die Erfindung eignet sich aber auch für die beispielsweise aus der WO 2007/039276 A1 bekannten Precoatpartikel. Zusätzlich zu dem partikelförmigen Material können weitere Partikel und/oder flüssige oder gasförmige Hilfsmittel zum Beaufschlagen des Oversprays verwendet werden, wie in der gleichzeitigen Patentanmeldung PCT ... (entsprechend der erwähnten DE 10 2007 040 153.3) beschrieben ist. Die Sprühkabine und das Abscheidungsprinzip können bis auf die nachfolgend beschriebenen Unterschiede der WO 2007/039276 A1 entsprechen, so dass sich insoweit eine nähere Beschreibung erübrigt.

Die dargestellte Anordnung enthält einen Vorlagebehälter 10 für das im Folgenden als Precoatmaterial bezeichnete frische, also noch nicht mit dem Nasslack-Overspray in Berührung gekommene Hilfsmaterial. Dieses Precoatmaterial soll nicht wie bei den bekannten Systemen mit einer Düsenanordnung in den Abluftstrom der Sprühkabine gesprüht werden, sondern über eine Hauptleitung 12 und Stichleitungen 13 direkt in die trichterförmig dargestellten Aufnahmebehälter 14 gefördert werden, die insoweit ähnlich wie die Aufnahmebehälter für gebrauchtes Precoatmaterial des aus WO 2007/039276 A1 bekannten Systems unterhalb des Applikationsbereich und des Kabinenbodens beispielsweise über die gesamte horizontale Querschnittsfläche der Kabine verteilt sein können.

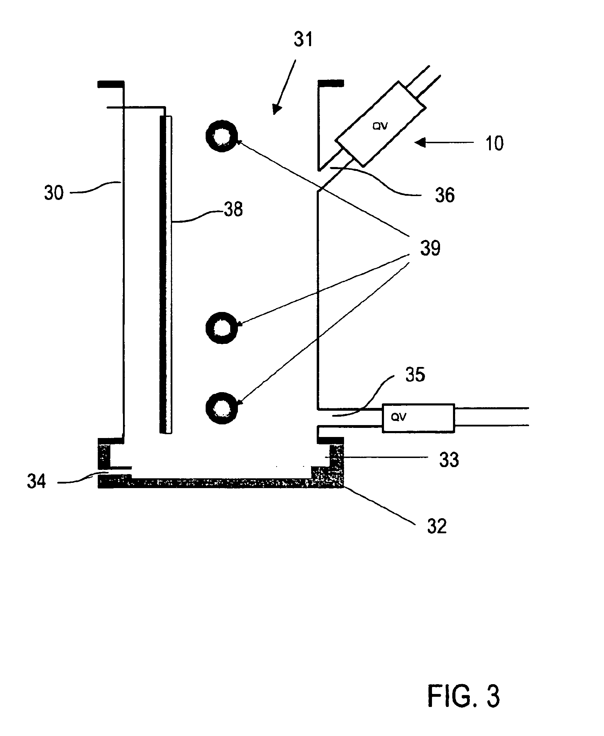

Der Vorlagebehälter 10 kann vorzugsweise in an sich bekannter Weise als Blowpot oder als einfacher Fluidisierungsbehälter ausgebildet sein, wie unter Bezugnahme auf Fig. 3 noch näher erläutert wird. Während ein Blowpot durch den Druck der Fluidisierungsluft entleert werden kann, wird anderfalls dem Fluidisierungsbehälter zur Materialförderung eine Pulverdosierpumpe 15 nachgeschaltet wie z. B. die in der WO 03/024612 A1 beschriebene DDF-Pumpe oder eine andere bekannte Dichtstrompumpe der eingangs erwähnten Art.

Zum Befüllen des Vorlagebehälters 10 ist z. B. vertikal über ihm ein größerer Vorratsbehälter (Gebinde) 17 für das frische Precoatmaterial angeordnet, aus dem im einfachsten Fall das Material durch eine mit einer Klappe verschließbaren Öffnung in den Vorlagebehälter 10 rieseln kann. Vorzugsweise soll der Vorlagebehälter 10 aber auch während der Materialförderung kontinuierlich nachfüllbar sein, um Zeitverluste im Betrieb zu vermeiden. Hierfür kann sich zwischen den beiden Behältern 10 und 17 eine mechanische Fördereinrichtung 18 wie beispielsweise eine Schneckenförderung oder insbesondere eine Zellenradschleuse befinden. Bei Einsatz einer solchen Fördereinrichtung lässt sich vorteilhaft auch eine gewünschte Füllmenge einstellen, im Fall einer Zellenradschleuse über die vorab bestimmbare Füllmenge pro Zelle.

Die Hauptleitung 12 besteht vorzugsweise aus flexiblen Schläuchen und endet bei dem in Fig. 1 dargestellten Beispiel an den zu je einem Behälter 14 führenden Stichleitungen 13. Bei einer in der Praxis zweckmäßigen Ausführungsform der Erfindung mit einer DDF-Pumpe können Schläuche mit einem Innendurchmesser bis etwa 14 mm, insbesondere 6 - 12 mm verwendet werden. Bei der alternativ möglichen Verwendung eines Blowpots kann der Innendurchmesser der Schläuche vorzugsweise etwa 12 mm bis etwa 42 mm betragen. Die Stichleitungen 13 können rohrförmig sein und sind darstellungsgemäß an der Reihe nach längs der Hauptleitung 12 verteilte Pulverweichen 19 angeschlossen, die aus dem Stand der Technik an sich bekannte mechanische Quetschweichen sein können. Statt einer Quetschweiche 19 können auch zwei ebenso einfache Quetschventile in der Stichleitung bzw. in der Hauptleitung vor oder hinter den Stichleitungen vorgesehen sein. Für den in der Reihe letzten Aufnahmebehälter 14 ist keine Abzweigung erforderlich, da er direkt über das Ende der Hauptleitung 13 beschickt werden kann. Es können auch zwei oder mehr Behälter gleichzeitig beschickt werden, beispielsweise darstellungsgemäß der letzte und der vorletzte Behälter.

Die Hauptleitung 12 kann zweckmäßig in verschiedene Zweige aufgeteilt sein, beispielsweise in zwei auf den beiden Seiten einer Lackierkabine verlaufende Zweige.

Im Betrieb sind die Hauptleitung 12 und alle Stichleitungen 13 zunächst leer. Wenn ein bestimmter Aufnahmebehälter 14 beschickt werden soll, wird die Hauptleitung hinter der betreffenden Abzweigstelle durch Quetschen gesperrt, die betreffende Stichleitung 13 geöffnet und das Precoatmaterial dann von dem Vorlagebehälter 10 in den betreffenden Aufnahmebehälter 14 gefördert.

Abschließend wird der beschriebene Leitungsweg in den betreffenden Behälter entleert und gespült. Das "Sackgassenprinzip" dieses Ausführungsbeispiels hat den Vorteil, dass die Beschickungsmenge immer genau bestimmt und dosierbar ist, und dass der Leitungsweg nicht verblocken kann, da stets eine Spülung in dem Aufnahmebehälter erfolgt.

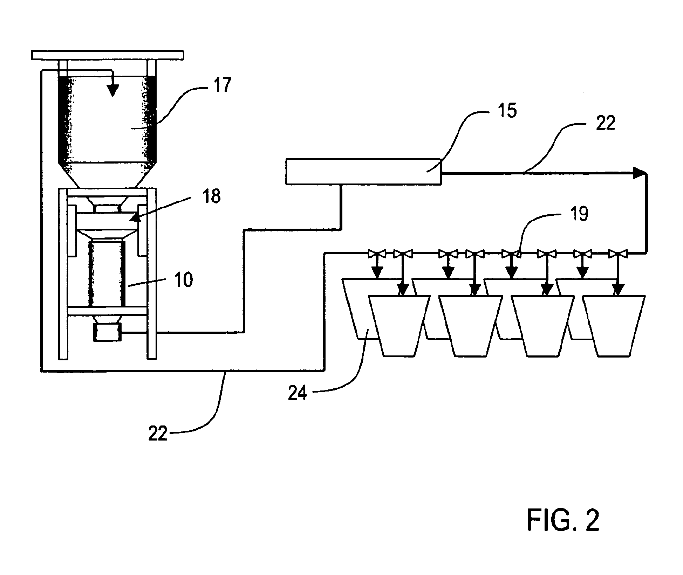

Das in Fig. 2 dargestellte abgewandelte Ausführungsbeispiel unterscheidet sich von Fig. 1 im Wesentlichen nur dadurch, dass die Hauptleitung 22 nicht an dem letzten Aufnahmebehälter 24 endet, sondern bis in den Vorratsbehälter 17 zurückgeführt ist. Infolge dessen ist eine kontinuierliche Kreisförderung des frischen Precoatmaterials von dem Vorratsbehälter 17 über den Vorlagebehälter 10 und durch die Hauptleitung 22 bis zurück in den Vorratsbehälter 17 möglich. Dies hat den Vorteil, dass bei Anforderung der Befüllung eines der Aufnahmebehälter an dessen Stichleitung sofort und ohne durch Spülen und Füllen der Hauptleitung verursachten Zeitverlust das Precoatmaterial zur Verfügung steht.

In Fig. 3 ist eine zweckmäßige Ausführungsform des Vorlagebehälters 10 dargestellt. Er besteht im Wesentlichen aus einem Zylinder 30 mit beliebiger Querschnittsform, der oben eine abdichtend verschließbare Einfüllöffnung 31 und unten über dem Behälterboden 32 einen luftdurchlässigen Fluidisierboden 33 hat. Unterhalb des Fluidisierbodens 33 besitzt der Behälter einen Anschluss 34 für die Fluidisierungsluft. Ebenfalls im unteren Behälterbereich befindet sich der durch ein Quetschventil Qv steuerbare Behälterauslass 35 für das Precoatmaterial.

Für die Verwendung des Vorlagebehälters 10 als einfacher Fluidisierbehälter ist im oberen Bereich eine Entlüftungsöffnung 36 vorgesehen, damit das Precoatmaterial von der Dosierpumpe 15 aus dem Behälter herausgesaugt werden kann. Bei Verwendung des Vorlagebehälters 10 als Blowpot wird die Entlüftungsöffnung 36 dagegen durch das dort vorgesehene Quetschventil QV geschlossen, so dass das Precoatmaterial durch den Druck der Fluidisierungsluft vom Anschluss 34 durch den Auslass 35 aus dem Behälter herausgefördert werden kann. Jedenfalls bei Betrieb als Blowpot wird der Behälter 10 an seiner Oberseite druckdicht geschlossen, was insbesondere mit der erwähnten Zellenradschleuse erreichbar ist, die auch beim Befüllen abdichtet. Eine Abdichtung lässt sich aber stattdessen auch mit anderen mechanischen Fördereinrichtungen sowie mit ebenfalls an sich bekannten Doppelklappenkonstruktionen erreichen.

Zur Steuerung des Befüllvolumens kann der Vorlagebehälter 10 eine Füllstandssonde 38 zur kontinuierlichen Messung des Füllstands über die gesamte Behälterhöhe und/oder in unterschiedlichen Höhenlagen platzierte Füllstandssensoren 39 zur punktuellen Messung enthalten. Diese Einrichtungen zur Füllstandsmessung ermöglichen mit wesentlich weniger Aufwand als die bei bekannten Blowpots und ähnlichen Behältern vorgesehenen Wiegeeinrichtungen eine genau dosierte Befüllung und die Vermeidung unerwünschter Überfüllung.

Im Unterschied zu dem aus der WO 2007/039276 A1 bekannten System können die unter dem Applikationsbereich über den Kabinenquerschnitt verteilten Aufnahmebehälter 14 selbst zur Einführung des frischen Precoatmaterials in den den Overspray enthaltenden Abluftstrom der Kabinenluft dienen. Zu diesem Zweck kann die lackhaltige Abluft beispielsweise mit Leitblechen od. dgl. direkt in den Aufnahmebehälter geleitet werden, wo sie sich mit dem fluidisierten Precoatmaterial mischt, und von wo sie anschließend durch eine (nicht dargestellte) Filtereinrichtung hindurch abgesaugt wird, die vertikal unter dem Applikationsbereich unmittelbar über den Aufnahmebehältern 14 angeordnet sein kann. Hierfür geeignete Filtereinrichtungen sind an sich bekannt, beispielsweise aus der eingangs schon erwähnten WO 2007/039276 A1. Dabei kann es zweckmäßig sein, das fluidisierte Hilfsmaterial in den Aufnahmebehältern 14 von oben durch eine Düsenanordnung zusätzlich mit Druckluft aufzuwirbeln, so dass das Hilfsmaterial von dem dort hindurchfließenden Kabinenluftstrom mitgenommen und auf die Filter geleitet wird. Wie in der oben erwähnten gleichzeitigen Patentanmeldung PCT ... beschrieben ist, können diese Aufwirbeldüsen vorteilhaft dazu verwendet werden, ein flüssiges oder gasförmiges zusätzliches Hilfsfluid einzusprühen.

Wie aus der obigen Beschreibung ersichtlich ist, kann bei diesem Ausführungsbeispiel der Erfindung die den Applikationsbereich durch den Kabinenboden verlassende Gasströmung unmittelbar über der Oberseite der Aufnahmebehälter 14 direkt in die dort angeordnete Filtereinrichtung gesaugt werden, statt wie im Fall der eingangs erwähnten DE 42 11 465 C2 durch den Boden einer unter dem Applikationsbereich befindlichen Mischkammer abgesaugt zu werden. Ferner wird bei der Erfindung vorzugsweise nur frisches Hilfsmaterial aus dem Vorlagebehälter 10 direkt in die Aufnahmebehälter 14 gefördert, ohne hierbei wie im bekannten Fall mit gleichzeitig aus der Filtereinrichtung wiedergewonnenem Hilfsmaterial vermischt zu werden.

## Patentansprüche

1. Verfahren zur Versorgung einer Beschichtungsanlage mit einem partikelförmigen Hilfsmaterial, das zur Beaufschlagung des Oversprays verwendet wird, welcher bei der Beschichtung von Werkstücken mit flüssigem Beschichtungsmaterial in eine durch den Applikationsbereich der Beschichtungsanlage fließende Luft- oder andere Gasströmung gelangt,
**dadurch gekennzeichnet, dass** das frische Hilfsmaterial aus mindestens einem Vorlagebehälter (10) über eine Leitungsanordnung (12) in eine im Bereich der Gasströmung befindliche Anordnung mit einem oder mehreren Aufnahmebehältern (14) gefördert wird.

2. Verfahren nach Anspruch 1, **dadurch gekennzeichnet, dass** das frische Hilfsmaterial während der Beaufschlagung des Oversprays in den Aufnahmebehältern (14) fluidisiert wird.

3. Verfahren nach Anspruch 1 oder 2, **dadurch gekennzeichnet, dass** das Hilfsmaterial von einem Blowpot oder von einer nach dem Dichtstromprinzip und/oder nach dem Saug/Druck-Prinzip fördernden Pulverpumpe (15) durch die Leitungsanordnung (12) gepumpt wird.

4. Verfahren nach einem der vorhergehenden Ansprüche, **dadurch gekennzeichnet, dass** die Leitungsanordnung eine Hauptleitung (12) enthält, aus der Stichleitungen (13) zu dem oder jedem der angeschlossenen Aufnahmebehälter (14) führen, und dass
a) nach der Beschickung eines Aufnahmebehälters (14) jeweils sowohl dessen Stichleitung (13) als auch die Hauptleitung (12) in diesen Aufnahmebehälter entleert und gespült werden
oder
b) das Hilfsmaterial kontinuierlich von dem Vorlagebehälter (10) zu den Anschlussstellen der Stichleitungen (13) und von dort zurück zu dem Vorlagebehälter (10) oder zu einem dem Vorlagebehälter vorgeschalteten Vorratsbehälter (17) durch die Hauptleitung (12) zirkuliert.

5. Verfahren nach einem der vorhergehenden Ansprüche, **dadurch gekennzeichnet, dass** die Aufnahmebehälter (14) zeitlich nacheinander beschickt werden.

6. Verfahren nach einem der vorhergehenden Ansprüche, **dadurch gekennzeichnet, dass** die den Applikationsbereich verlassende Gasströmung nach Beaufschlagung mit dem Hilfsmaterial oberhalb der Aufnahmebehälteranordnung (14) in eine Filtereinrichtung geleitet wird.

7. Verfahren nach einem der vorhergehenden Ansprüche, **dadurch gekennzeichnet, dass** nur das frische Hilfsmaterial aus dem Vorlagebehälter (10) in die Aufnahmebehälteranordnung (14) gefördert wird.

8. Einrichtung zur Versorgung einer Beschichtungsanlage mit einem partikelförmigen Hilfsmaterial, das zur Beaufschlagung des Oversprays verwendet wird, welcher bei der Beschichtung von Werkstücken mit flüssigem Beschichtungsmaterial in eine durch den Applikationsbereich der Beschichtungsanlage fließende Luft- oder andere Gasströmung gelangt,
mit mindestens einem Vorlagebehälter (10) für das frische Hilfsmaterial und
mit einer vorzugsweise unter dem Applikationsbereich und/oder vorzugsweise im Bereich der Gasströmung befindlichen Anordnung mit einem oder mehreren Aufnahmebehältern (14) für das Hilfsmaterial,
**dadurch gekennzeichnet, dass** das frische Hilfsmaterial durch eine von dem Vorlagebehälter (10) bis in die Aufnahmebehälteranordnung (14) führende Leitungsanordnung (12) gefördert wird.

9. Einrichtung nach Anspruch 8, **dadurch gekennzeichnet, dass** die mit dem Hilfsmaterial beaufschlagte Gasströmung in eine Filtereinrichtung geleitet wird, die unter dem Applikationsbereich über der Aufnahmebehälteranordnung (14) angeordnet ist.

10. Einrichtung nach Anspruch 8 oder 9, **dadurch gekennzeichnet, dass** der Vorlagebehälter (10) als Blowpot ausgebildet ist oder eine nach dem Dichtstromprinzip und/oder nach dem Saug/Druck-Prinzip fördernde Pulverpumpe (15) in die Leitungsanordnung (12) geschaltet ist.

11. Einrichtung nach einem der Ansprüche 8 bis 10, **dadurch gekennzeichnet, dass** das Hilfsmaterial in den Aufnahmebehältern (14) fluidisiert wird.

12. Einrichtung nach einem der Ansprüche 8 bis 11, **dadurch gekennzeichnet, dass** die Leitungsanordnung eine Hauptleitung (12) enthält, aus der Stichleitungen (13) zu dem oder jedem der angeschlossenen Aufnahmebehälter (14) führen, wobei die Leitungsanordnung (12) insbesondere von der Aufnahmebehälteranordnung (14) bis zurück zu dem Vorlagebehälter (10) oder zu einem dem Vorlagebehälter vorgeschalteten Vorratsbehälter (17) führt.

13. Einrichtung nach einem der Ansprüche 8 bis 12, **dadurch gekennzeichnet, dass** die Leitungsanordnung (12) im Wesentlichen durch eine flexible Schlauchanordnung gebildet ist und/oder zur Steuerung des Materialflusses zu den Stichleitungen (13) Quetschweichen (19) enthält.

14. Einrichtung nach einem der Ansprüche 8 bis 13, **dadurch gekennzeichnet, dass** der Vorlagebehälter (10) unterhalb eines Vorratsbehälters (17) für das Hilfsmaterial angeordnet ist und sich zwischen diesen Behältern (10, 17) eine verschließbare Klappenanordnung und/oder eine mechanische Fördereinrichtung (18) wie z. B. eine Zellenradschleuse oder ein Schneckenförderer befinden.

15. Einrichtung nach einem der Ansprüche 8 bis 14, **dadurch gekennzeichnet, dass** der Vorlagebehälter (10) eine Einrichtung (38, 39) zum Messen der Füllhöhe enthält, wobei insbesondere eine Sonde (38) zur Messung des Füllstands kontinuierlich über die Behälterhöhe und/oder in unterschiedlichen Höhenlagen platzierte Füllstandssensoren (39) zur punktuellen Messung vorgesehen sind.

## Claims

1. A method for supplying a coating system with a particulate auxiliary material which is used for charging the overspray which, when coating workpieces with liquid coating material, enters into an air or other gas flow flowing through the application region of the coating system, **characterized in that** the fresh auxiliary material is conveyed from at least one feed container (10) via a line arrangement (12) into an arrangement, located in the region of the gas flow, having one or more reception containers (14).

2. The method according to Claim 1, **characterized in that** the fresh auxiliary material is fluidised during the charging of the overspray in the reception containers (14).

3. Method according to Claim 1 or 2, **characterized in that** the auxiliary material is pumped through the line arrangement (12) by a blow pot or by a powder pump (15) which conveys substances pursuant to the dense flow principle and/or pursuant to the suction/pressure principle.

4. The method according to any one of the preceding Claims, **characterized in that** the line arrangement contains a main line (12) from which branch lines (13) lead to the or each of the connected reception containers (14),
and **in that**
a) after filling a reception container (14), its branch line (13) and also the main line (12) are in each case emptied into this reception container and flushed, or
b) the auxiliary material is continuously circulated through the main line (12) from the feed container (10) to the connection points of the branch lines (13) and from there back to the feed container (10) or to a storage container (17) connected upstream of the feed container.

5. The method according to any one of the preceding Claims, **characterized in that** the reception containers (14) are filled in a chronological sequence.

6. The method according to any one of the preceding Claims, **characterized in that** the gas flow exiting the application region is fed into a filter device above the reception container arrangement (14) after being charged with the auxiliary material.

7. The method according to any one of the preceding Claims, **characterized in that** only the fresh auxiliary material from the feed container (10) is conveyed into the reception container arrangement (14).

8. A device for supplying a coating system with a particulate auxiliary material which is used for charging the overspray which, when coating workpieces with liquid coating material, enters into an air or other gas flow flowing through the application region of the coating system, having at least one feed container (10) for the fresh auxiliary material, and having an arrangement, preferably located beneath the application region, having one or more reception containers (14) for the auxiliary material, **characterized in that** the fresh auxiliary material is conveyed by a line arrangement (12) leading from the feed container (10) to the reception container arrangement (14).

9. The device according to Claim 8, **characterized in that** the gas flow charged with the auxiliary material is fed into a filter device which is arranged beneath the application region above the reception container arrangement (14).

10. The device according to Claim 8 or 9, **characterized in that** the feed container (10) is formed as a blow pot or a powder pump (15) which conveys substances pursuant to the dense flow principle and/or pursuant to the suction/pressure principle is connected in the line arrangement (12).

11. The device according to any one of Claims 8 to 10, **characterized in that** the auxiliary material is fluidised in the reception containers (14).

12. The device according to any one of Claims 8 to 11, **characterized in that** the line arrangement contains a main line (12) from which branch lines (13) lead to the or each of the connected reception containers (14), wherein the line arrangement (12) particularly leads from the reception container arrangement (14) back to the feed container (10) or to a storage container (17) connected upstream of the feed container.

13. The device according to any one of Claims 8 to 12, **characterized in that** the line (12) is substantially formed by a flexible hose arrangement and/or contains squeeze distributors (19) for controlling the material flow to the branch lines (13).

14. The device according to any one of Claims 8 to 13, **characterized in that** the feed container (10) is disposed beneath a storage container (17) for the auxiliary material and between these containers (10, 17) there is located a closable flap arrangement and/or a mechanical conveying device (18) such as for example a rotating batch metering unit or a screw conveyor.

15. The device according to any one of Claims 8 to 14, **characterized in that** the feed container (10) contains a device (38, 39) for measuring the filling level, wherein particularly a probe (38) for continuously measuring the filling level over the container height and/or filling level sensors (39) placed at different heights for measuring at specific points are provided.

## Revendications

1. Procédé pour alimenter une installation de revêtement avec un matériau auxiliaire sous forme de particules, qui est utilisé pour l'admission de l'excédent de pulvérisation, qui, lors du revêtement de pièces avec du matériau de revêtement liquide, parvient dans un écoulement d'air circulant à travers la zone d'application de l'installation de revêtement ou dans un autre écoulement de gaz, **caractérisé en ce que** le matériau auxiliaire frais est transporté à partir d'au moins un récipient collecteur (10) au moyen d'un agencement de conduite (12) dans un agencement se trouvant dans la zone de l'écoulement de gaz avec un ou plusieurs récipients de logement (14).

2. Procédé selon la revendication 1, **caractérisé en ce que** le matériau auxiliaire frais est fluidisé pendant l'admission de l'excédent de pulvérisation dans les récipients de logement (14).

3. Procédé selon la revendication 1 ou 2, **caractérisé en ce que** le matériau auxiliaire est pompé par un blowpot ou par une pompe à poudre (15) transportant selon le principe de flux étanche ou selon le principe d'aspiration/refoulement à travers l'agencement de conduite (12).

4. Procédé selon l'une quelconque des revendications précédentes, **caractérisé en ce que** l'agencement de conduite contient une conduite principale (12), de laquelle des tronçons de conduite (13) partent vers le récipient de logement ou chacun des récipients de logement (14) raccordés, et **en ce que**
a) après l'alimentation d'un récipient de logement (14), à chaque fois aussi bien son tronçon de conduite (13) que la conduite principale (12) sont vidés et lavés dans ce récipient de logement ou
b) le matériau auxiliaire circule de façon continue depuis le récipient collecteur (10) vers les points de branchement des tronçons de conduite (13) et de là revient au récipient collecteur (10) ou circule vers un récipient de réserve (17) placé en amont du récipient collecteur à travers la conduite principale (12).

5. Procédé selon l'une quelconque des revendications précédentes, **caractérisé en ce que** les récipients de logement (14) sont alimentés de façon successive.

6. Procédé selon l'une quelconque des revendications précédentes, **caractérisé en ce que** l'écoulement de gaz quittant la zone d'application est guidé, après l'alimentation avec le matériau auxiliaire au-dessus de l'agencement de récipient de logement (14), dans un dispositif de filtrage.

7. Procédé selon l'une quelconque des revendications précédentes, **caractérisé en ce que** seul le matériau auxiliaire frais est transporté du récipient collecteur (10) dans l'agencement de récipient de logement (14).

8. Dispositif pour alimenter une installation de revêtement avec un matériau auxiliaire sous forme de particules, qui est utilisé pour l'admission de l'excédent de pulvérisation, lequel, lors de l'enduction de pièces avec du matériau de revêtement liquide, parvient dans un écoulement d'air circulant à travers la zone d'application de l'installation de revêtement ou dans un autre écoulement de gaz,
comprenant au moins un récipient collecteur (10) pour le matériau auxiliaire frais et
un agencement se trouvant de préférence au-dessous de la zone d'application et/ou de préférence dans la zone de l'écoulement de gaz avec un ou plusieurs récipients de logement (14) pour le matériau auxiliaire,
**caractérisé en ce que** le matériau auxiliaire frais est transporté à travers un agencement de conduite (12) allant du récipient collecteur (10) jusque dans l'agencement de récipient de logement (14).

9. Dispositif selon la revendication 8, **caractérisé en ce que** l'écoulement de gaz alimenté avec le matériau auxiliaire est acheminé dans un dispositif de filtrage qui est disposé au-dessous de la zone d'application au-dessus de l'agencement de récipient de logement (14).

10. Dispositif selon la revendication 8 ou 9, **caractérisé en ce que** le récipient collecteur (10) est conçu comme blowpot ou bien une pompe à poudre (15) transportant selon le principe de flux étanche et/ou selon le principe d'aspiration/refoulement est commutée dans l'agencement de conduite (12).

11. Dispositif selon l'une quelconque des revendications 8 à 10, **caractérisé en ce que** le matériau auxiliaire est fluidisé dans les récipients de logement (14).

12. Dispositif selon l'une quelconque des revendications 8 à 11, **caractérisé en ce que** l'agencement de conduite contient une conduite principale (12), de laquelle des tronçons de conduite (13) partent vers le récipient de logement ou chacun des récipients de logement (14) raccordés, l'agencement de conduite (12) allant en particulier de l'agencement de récipient de logement (14) jusqu'au retour au récipient collecteur (10) ou vers un récipient de réserve (17) placé en amont du récipient collecteur.

13. Dispositif selon l'une quelconque des revendications 8 à 12, **caractérisé en ce que** l'agencement de conduite (12) est formé essentiellement par un agencement de tuyau flexible et/ou contient des aiguillages d'écrasement (19) pour la commande du flux de matériau vers les tronçons de conduite (13).

14. Dispositif selon l'une quelconque des revendications 8 à 13, **caractérisé en ce que** le récipient collecteur (10) est disposé au-dessous d'un récipient de réserve (17) pour le matériau auxiliaire et un agencement de clapet verrouillable et/ou un dispositif de transport (18) mécanique, comme par exemple un sas à roue cellulaire ou un transporteur à vis sans fin se trouvent entre ces récipients (10, 17).

15. Dispositif selon l'une quelconque des revendications 8 à 14, **caractérisé en ce que** le récipient collecteur (10) contient un dispositif (38, 39) pour la mesure de la hauteur de remplissage, en particulier une sonde (38) étant prévue pour la mesure du niveau de remplissage de façon continue au-dessus de la hauteur du récipient et/ou des capteurs de niveau de remplissage (39) placés à différentes hauteurs étant prévus pour la mesure ponctuelle.
